# EUROPEAN PATENT SPECIFICATION

(11) **EP 1 544 263 B1**
(45) Date of publication and mention of the grant of the patent: **23.04.2008**
(21) Application number: 03028883.1
(22) Date of filing: 16.12.2003
(51) Int. Cl.: C09D 11/10, C08G 8/34

(54) **Binder for letterpress printing ink for direct cigarette printing**
Bindemittel für Buchdrucktinte für den directen Zigarettendruck
Liant pour encre typographique pour l'imprimerie directe des cigarettes

(43) Date of publication of application: 22.06.2005
(73) Proprietor: Siegwerk Benelux NV, 2880 Bornem (BE)
(72) Inventor: Noirot, Pierre-Antoine, 1180 Uccle (BE); Catherin, Gilles, 01630 Sait Genis Pouilly (BE)
(74) Representative: Welch, Andreas

(56) References cited:
- EP-A- 0 548 506
- EP-A- 1 031 587
- DE-A- 19 947 939
- US-A- 4 857 624

## Description

The present invention relates to a letterpress printing ink composition which is useful for printing on smoking article wrapping material, such as cigarettes.

Almost all cigarette manufacturers are nowadays decorating the cigarette shaft with printed logos or brands, usually with red, blue or golden inks. Those decorations aid in differentiate a product from other products in the market and to protect the product from counterfeiting. On the other hand, such decorations reinforce a brand by enhancing the identification of the product, or simply provide the customer with certain information, e.g. concerning the quality of the product.

Two main processes are used by the International Cigarette Companies in achieving a logo/descriptor on the cigarette:
- Direct printing at the cigarette making stage via letterpress printing process.
- Pre-printed tipping (mainly used on white filter cigarettes)

The direct printing method is a conventional (air dried) letterpress application, in which it is printed directly onto the cigarette paper. The inking unit is generally located within the cigarette making part of the machine. The Ink is applied to the cigarette paper at high speed at the beginning of the entire process. Thereafter, the paper is filled with tobacco and then glued together by heating so as to obtain the known cigarette from. Finally, if desired, a filter is added to the cigarette.

The speed of these machines can vary from one type cigarette maker to another, and be categorized as either a single or twin track maker. Twin track makers generally run slightly faster than a single-track maker (this is qualified in terms of cigarettes per minute, usually 4 to 7000 cigarettes/minute/track). In the vast majority of cases the 'dies' are metal (steel), as the surface of the cigarette paper is coarse and any other material would ware out. The printing speed poses certain requirements the ink has to fulfill in order to obtain sufficient print quality.

As the ink is brought near the mouth and because its components can be inhaled by the smoker, there are moreover critical issues as to the safety and non-toxicity of the used ink. For this reason, and encouraged by the legislation pressure, Tobacco companies are increasingly attentive to the composition of these inks, and tend to replace the "standard" offset/ letterpress inks by die inks which meets the severe toxicological standards of the tobacco industry.

Typically, viscous oil-based inks have been used for the printing of cigarettes. In WO 99/51439, an improved method for cigarette printing involving a flexographic printing process has been suggested. However, said method has the problem that the speed of the process is not as high as in the commonly used letterpress process.

The inks known from the prior art for cigarette printing comprise several ingredients which cannot be tolerated anymore, especially in view of the increasingly stricter regulations imposed by several countries, such as Germany,

It was therefore the object of the present invention to provide a printing ink for the printing of cigarettes by a letterpress printing process which exclusively comprises only ingredients which comply with the requirements imposed in the countries' respective regulations, e.g. the German tobacco regulation (Tabakverordnung), but still provides good printing quality.

This object is solved by a printing ink and a binder system contained therein as specified in the claims.

In particular, the present invention provides a binder for such letterpress printing inks, comprising a resin which is a modified condensation product of phenol and formaldehyde, said modified condensation product having a molecular weight ranging from 300 to 10 millions, with more than 24% of the product having a molecular weight above 1 million, and a melting point of at least 130°C, and an absolutely aromatic-free solvent.

According to the present invention, indicated ranges and ratios are to be understood to also comprise the indicated boundaries. For example, a ratio of 2:1 also comprises 1:1 and 2:1.

The present invention is furthermore related to a letterpress printing ink comprising the above binder, at least one colorant and optionally additives, wherein said colorants and additives are essentially non-toxic and preferably of food grade.

The main component of the ink according to the present invention is the binder. It has been surprisingly found that by using the specific combination of resin and solvent system as defined above both the regulatory requirements imposed on inks for direct cigarette printing as well as a required good printing quality can be met. In particular, a good and even ink transfer without accumulation within the inking unit can be achieved without occurrence of misting or spitting at high speed. Printing can be carried out a high speed without a loss of printing quality. The ink has a good stability and sets fast on the cigarette paper. Moreover, the ink does not exhibit any adverse odor which of course would be detrimental in the field of cigarette printing.

On the other hand, all the components of the present binder comply with the current regulatory requirements imposed on ingredients for cigarettes. Those requirements are, for example, defined in the German tobacco regulation (Tabakverordnung).

The binder according to the present invention comprises a resin which is a modified condensation product of phenol and formaldehyde.

Said modified condensation product has a molecular weight ranging from 300 to 10 millions, with more than 24% of the product having a molecular weight above 1 million. According to a preferred embodiment of the present invention, furthermore the molecular weight of 11 % of said condensation product is below 1000, of 55 % of said condensation product is between 1000 and 100 000, and of 10 % of said condensation product is between 100 000 and 1 million. According to the present invention, the molecular weights are determined by standard GPC.

Said modified condensation product has furthermore a melting point of at least 130°C, preferably between 130 and 190°C, and most preferably between 150°C and 180°C.

According to the present invention, the resin component is preferably a phenol-formaldehyde-modified rosin (colophonium) resin.

The other important component in the binder of the present invention is the solvent. According to the present invention, one or more solvents may be used. A mixture of two solvents is preferred. The solvent has to be selected such that the correct rheology and drying of the letterpress ink is obtained.

In order to meet the objects of the present invention, an absolutely aromatic-free solvent system has to be used, i.e. a solvent system that does not contain any components having aromatic moieties such as benzene or naphthene moieties. It goes without saying that also the solvents have to fulfill the regulatory requirements as to non-toxicity. Those solvents are preferably selected from the range of purest mineral solvents. Particularly preferred according to the present invention are mineral oils fulfilling the requirements of the US Federal Drug Administration (FDA), 21 CFR 178.3620(a). Especially preferred are white oil of the grade required by FDA 21 CFR 178.3620(a). Those oils are commercially available, for example the CLARION® Food Grade white mineral oils from CITGO Petroleum Corporation (USA), or Ondina oil range from Shell.

According to the present invention, it is particularly preferred to use the above solvent in combination with a natural vegetable oil such as soya oil, linseed oil or tung oil. It is preferred to use a mixture of mineral oil and vegetable oil in a ratio of 1:1 to 5: 1, particularly preferred in a ratio of 1: to 2: 1.

According to the present invention, a ratio of resin component to solvent system of 1:1 to 1:2 is preferred.

The binder according to the present invention can be prepared according to methods well-known to the skilled man. The resin and the solvent are combined with each other and stirred at elevated temperature, preferably above 100°C, more preferably above 200°C, for 10 minutes to 12 h, preferably for 30 minutes to 2 hours.

It has surprisingly been found that the above binder is able to provide sufficient wetting characteristics required for use in an ink composition, without any addition of co-solvents or plasticizers that are commonly added in order to improve the wetting characteristics. Those co-solvents or plasticizers cannot be used in the ink according to the present invention due to the regulatory restrictions imposed on printing inks for direct cigarette printing.

The letterpress printing ink according to the present invention comprises the above-defined binder, additionally at least one colorant and optionally additives, wherein said colorants and additives are essentially non-toxic. This is required for the application of direct cigarette printing. Preferably, the colorants and additives are of food grade.

Thus, the number of colorants which can be used in the ink of the present invention is limited. Generally, any colorant mentioned in the German Tobacco regulation (Tabakverordnung) as acceptable ingredient can be used. Examples are carbo medicinalis vegetabilis (E 153), iron oxide (E 172), cochenillic red A (E 124), yellow orange S (E 110), Amaranth (E 123), Anthrachinone blue, Tartracine ( E102), Indigo red (E 132), Brilliant Blue (E 133), gold bronze, silver bronze (E 170), or titanium dioxide (E 171 ).

The colorants which can be used in the ink of the present invention in general only have a weak coloring power. Thus, it is necessary to use those colorants in a higher amount than usually applied in letterpress inks. According to the present invention, at least 25 % by weight of colorant(s) should be used in order to obtain a good coloring power. It has been surprisingly found that by using the binder according to the present invention, even such high amounts of colorant(s) do not result in problems of ink transfer.

As additives, commonly used additives such as plasticizers, waxes, siccatives or anti-skin agents may be used. It has, however, to be borne in mind that in the ink of the present invention only those additives may be included which fulfill the regulatory requirements imposed for direct cigarette printing. For example, as plasticizer glycerol (E 422) may be used. Also, certain alkyd resins such as soya alkyd resin, or long chain fatty acids above 6 carbon atoms length, or colophonium hydrogenated resins may be used.

Usually, the ink formulation according to the present invention additionally comprises a solvent. As solvent, the solvents used in the binder of the present invention may be considered.

A typical ink composition of the present invention comprises 25-50 % by weight colorant, 20-50% by weight binder, 5-20% by weight solvent (beside the solvent present in the binder) and the balance of additives.

The ink according to the present invention can be prepared according to methods generally known to the skilled man. Thus, at first the colorant is thoroughly mixed together with the other ingredients. Thereafter, grinding is carried out, for example on a tripple roller mill machine, until a desired particle size has been obtained. According to the present invention, a particle size of less than 12 µm is preferred.

The binder and the letterpress ink according to the present invention can be generally used in any application wherein letterpress printing is carried out. However, the binder and the ink of the present invention has been specifically designed for direct cigarette printing and thus meets the regulatory requirements for that application. Moreover, in a direct printing process the ink of the present invention provides a good and even transfer of the ink on the little rollers. No accumulation occurs. No mist generation even at high speed occurs. Even when the printing process is interrupted or stopped, the ink shows good stability and does not dry or become sticky during stops. The ink of the present invention allows for immediate colour density and shows fast setting on the paper. no build up of the ink during the cigarette formation occurs.

With the ink of the present invention, sharp and neat prints on cigarettes can be obtained which are free of smearing. Moreover, no bad odor is generated by the ink which could adversly influence the taste of the cigarettes.

The present invention will be illustrated in more detail with reference to non-limiting examples and drawings.

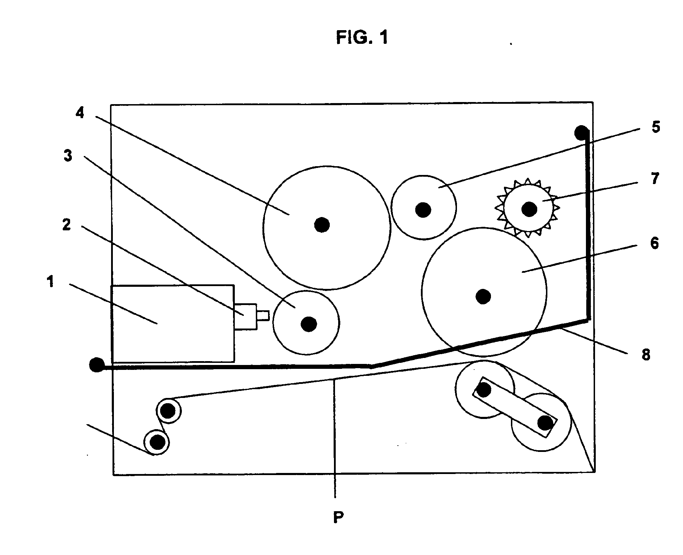

Fig 1. shows an example of a printing machine which can be used for direct cigarette printing.

Unless otherwise indicated, all percentages are % by weight.

### Example

A binder (or die ink varnish) was prepared using the following components:

| | |
|---|---|
| Phenol-formaldehyde modified colophonium resin | 40 % by weight |
| Vegetable natural oil | 20 % by weight |
| White oil (FDA 178.3620(a) grade) | 40 % by weight |

The resin and the two oils were stirred for an hour at 210°C. The resulting varnish was used for the preparation of the letterpress ink. The letterpress ink consisted of the following components:

| | |
|---|---|
| Die ink varnish (see above) | 35 % by weight |
| Colorant (Food grade) | 35 % by weight |
| Soya alkyd resin | 20 % by weight |
| White oil (FDA 178.3620(a) grade) | 10 % by weight |

The colorant was thoroughly mixed with the other components. Thereafter, grinding was carried out using a tripple roller machine until a particle size of less than 12 µm was obtained.

The cigarette paper was printed on by means of a stamping process. In this process no water was used. The machine used is illustrated in Figure 1. It is a Hauni Protos VE80. The ink was put in a metal syringe. The syringe was placed in its holder (1). The syringe was connected to a nozzle (2). This nozzle drips the ink on a rubber roller (3). From this rubber roller (3) the ink was transferred over a large metal (copper) roller (4) onto a second rubber roller (5).

The second rubber roller transferred the ink onto a metal roller (6). This roller was a metal roller fitted with metal stamps, which are elevated. On these stamps was the image to be printed. From these stamps the ink was transferred onto the paper. A brush (7) was placed next to the second rubber roller and wiped the stamps clean after printing, but before inking. It was mainly there to prevent dust and other particles to settle on the stamps and to remove the excess ink. A metal plate (8) was placed between the press and the paper, leaving a gap for printing, to protect the paper (P) from any splashes or drips from the press.

The ink distribution was controlled by the number of revolutions made per ink injection. If more ink is needed to get a good image, the number of revolutions is decreased. In the example, a printing speed of around 8000 cigarettes per minute was applied. The printing machine was not heated or cooled. A run started at room temperature, but over time the rollers can heat up top around 40°C.

The prints on the cigarettes obtained under these conditions were of good quality and showed the characteristics mentioend above for the inks of the present invention.

## Claims

1. Binder for letterpress printing inks, comprising a resin which is a modified condensation product of phenol and formaldehyde, said modified condensation product having a molecular weight ranging from 300 to 10 million, determined by standard GPC, with more than 24% of the product having a molecular weight above 1 million, and a melting point of at least 130°C, and an absolutely aromatic-free solvent.

2. Binder according to claim 1, wherein the resin is a phenol-formaldehyde-modified rosin (colophonium) resin.

3. Binder according to claim 1 or 2, wherein the solvent comprises a mineral oil fulfilling the requirements of the US Federal Drug Administration (FDA), 21 CFR 178.3620(a).

4. Binder according to claim 3, wherein the mineral oil is a white oil.

5. Binder according to any one of claims 1 to 4, wherein the solvent additionally comprises a vegetable oil.

6. Binder according to claim 5, wherein a mixture of mineral oil and vegetable oil in a ratio of 1:1 to 5: 1, particularly preferred in a ratio of 1: to 2: 1, is used.

7. Binder according to any one of claims 1 to 6, wherein the ratio of resin component to solvent system is between 1:1 to 1:2.

8. Letterpress printing ink, comprising a binder according to any one of claims 1 to 7.

9. Letterpress printing ink according to claim 8, additionally comprising at least one colorant and optionally additives, wherein said colorants and additives are essentially non-toxic, preferably of food grade.

10. Letterpress printing ink according to any one of claims 8 or 9, wherein the ink comprises at least 25 % by weight of colorant.

11. Use of a binder according to any one of claims 1 to 7 for the preparation of a letterpress ink for direct cigarette printing.

12. Use of a letterpress printing ink according to any one of claims 8 to 10 for direct cigarette printing.

## Patentansprüche

1. Bindemittel für Druckfarben für den Buchdruck, umfassend ein Harz, das ein modifiziertes Kondensationsprodukt von Phenol und Formaldehyd ist, wobei das modifizierte Kondensationsprodukt ein durch standardmäßige GPC bestimmtes Molekulargewicht im Bereich von 300 bis 10 Millionen hat, wobei mehr als 24 % des Produkts ein Molekulargewicht über 1 Million aufweist, und einen Schmelzpunkt von mindestens 130°C aufweist, und ein absolut aromatenfreies Lösungsmittel.

2. Bindemittel nach Anspruch 1, wobei das Harz ein Phenol-Formaldehyd-modifiziertes Rosin- (Kolophonium-) Harz ist.

3. Bindemittel nach Anspruch 1 oder 2, wobei das Lösungsmittel ein Mineralöl umfasst, das die Anforderungen der US Federal Drug Administration (FDA), 21 CFR 178.3620(a) erfüllt.

4. Bindemittel nach Anspruch 3, wobei das Mineralöl ein Weißöl ist.

5. Bindemittel nach einem der Ansprüche 1 bis 4, wobei das Lösungsmittel zusätzlich ein Pflanzenöl umfasst.

6. Bindemittel nach Anspruch 5, wobei ein Gemisch aus Mineralöl und Pflanzenöl in einem Verhältnis von 1:1 bis 5:1, besonders bevorzugt in einem Verhältnis von 1: bis 2:1 verwendet wird.

7. Bindemittel nach einem der Ansprüche 1 bis 6, wobei das Verhältnis von Harzkomponente zu Lösungsmittelsystem zwischen 1:1 bis 1:2 liegt.

8. Druckfarbe für Buchdruck, umfassend ein Bindemittel nach einem der Ansprüche 1 bis 7.

9. Druckfarbe für Buchdruck nach Anspruch 8, zusätzlich umfassend mindestens einen Farbstoff und wahlweise Additive, wobei der Farbstoff und die Additive im Wesentlichen nicht-toxisch, vorzugsweise in Lebensmittelqualität sind.

10. Druckfarbe für Buchdruck nach einem der Ansprüche 8 oder 9, wobei die Druckfarbe mindestens 25 Gew.% Farbstoff umfasst.

11. Verwendung eines Bindemittels nach einem der Ansprüche 1 bis 7 zur Herstellung einer Druckfarbe für Buchdruck zum direkten Bedrucken von Zigaretten.

12. Verwendung einer Druckfarbe für Buchdruck nach einem der Ansprüche 8 bis 10 zum direkten Bedrucken von Zigaretten.

## Revendications

1. Liant pour encres typographiques, qui comprend une résine qui est un produit de condensation modifié de phénol et de formaldéhyde, ledit produit de condensation modifié possédant un poids moléculaire dans la plage de 300 à 10 000 000, déterminé par une CPG ordinaire, dont plus de 24 % du produit présente un poids moléculaire supérieur à 1 000 000 et un point de fusion d'au moins 130 °C, et un solvant absolument non aromatique.

2. Liant selon la revendication 1, dans lequel la résine est une résine de phénol-formaldéhyde modifiée et de colophane.

3. Liant selon la revendication 1 ou la revendication 2, dans lequel le solvant comprend une huile minérale qui satisfait les exigences de la norme 21 CFT 178,3620(a) de la FDA (administration des aliments et drogues aux États-Unis).

4. Liant selon la revendication 3, dans lequel l'huile minérale est une huile blanche.

5. Liant selon l'une quelconque des revendications 1 à 4, dans lequel le solvant comprend en outre une huile végétale.

6. Liant selon la revendication 5, dans lequel un mélange d'huile minérale et d'huile végétale dans un rapport de 1:1 à 5:1, de préférence dans un rapport de 1:1 à 2:1, est utilisé.

7. Liant selon l'une quelconque des revendications 1 à 6, dans lequel le rapport du composant de résine au système de solvant se situe entre 1:1 à 1:2.

8. Encre typographique, qui comprend un liant selon l'une quelconque des revendications 1 à 7.

9. Encre typographique selon la revendication 8, qui comprend en outre au moins un colorant et éventuellement des additifs, dans laquelle lesdits colorants et additifs sont essentiellement non toxiques, de préférence de qualité alimentaire.

10. Encre typographique selon l'une quelconque des revendications 8 ou 9, dans laquelle l'encre comprend au moins 25 % en poids de colorant.

11. Utilisation d'un liant selon l'une quelconque des revendications 1 à 7 pour la préparation d'une encre typographique pour une impression directement sur une cigarette.

12. Utilisation d'une encre typographique selon l'une quelconque des revendications 8 à 10 pour une impression directement sur une cigarette.
